# EUROPEAN PATENT APPLICATION

(11) **EP 4 557 213 A1**
(43) Date of publication of application: **21.05.2025**
(21) Application number: 23210090.9
(22) Date of filing: 15.11.2023
(51) Int. Cl.: G06T 5/00, G06T 5/60, G06T 5/70

(54) **ENHANCING IMAGE QUALITY OF MEDICAL IMAGES AND PROVIDING MEDICAL IMAGE DATA TO A USER**

(71) Applicant: Koninklijke Philips N.V., 5656 AG Eindhoven (NL)
(72) Inventor: WUELKER, Christian, Eindhoven (NL); WILD, Sebastian, Eindhoven (NL); SOSSIN, Artur, 5656AG Eindhoven (NL); GRASS, Michael, Eindhoven (NL)
(74) Representative: Philips Intellectual Property & Standards

(57) **Abstract**

A computer-implemented method for enhancing the image quality of a medical image region, the medical image region comprising medical image data acquired by a medical imaging modality, the method comprising the following steps:
(a) receiving image data from within the medical image region;
(b) applying a denoising algorithm (4) on the image data of the medical image region in order to produce denoised image data (5);
(c) applying a deblurring algorithm (6) on the denoised image data (5) in order to produce enhanced image data (7);
(d) providing the enhanced image data (7).

## Description

### FIELD OF THE INVENTION

The invention relates to a computer-implemented method for enhancing the image quality of a medical image region, a computer-implemented method for providing medical image data to a user, and a corresponding computer program, user interface, and image processing system.

### BACKGROUND OF THE INVENTION

The amount of data produced by medical imaging modalities has increased significantly in the preceding years and is still on the rise. This can, at least partially, be attributed to technical advances of the imaging modalities. This is especially true for tomographic modalities like Computed Tomography (CT) and Magnetic Resonance Imaging (MRI). For example, high-resolution CT imaging (including conventional or photon counting) requires using larger voxel grids to fully exploit the increase in resolution, e.g. a factor of 4 or more increase in volume. Another example of an imaging modality which produces large amounts of data is spectral dual layer CT. As a result, the storage, processing, and transmission of the respective data becomes more and more challenging. Upcoming new techniques may lead to even more pressing problems regarding the storage, processing, and transmission of data.
On the other hand, given the already powerful technology of imaging devices, it is also desirable to provide medical image data, e.g. required for diagnosis, in high quality to enable improved possibilities of diagnosis. In some cases, the quality of image data and limited data storage can be seen as competing aspects.

### OBJECT OF THE INVENTION

It is, therefore, an object of the invention to provide improved means for compact representation of informative and meaningful image data. It would be desirable to provide means to reduce the amount of data that is required to be stored, processed and/or transmitted. Additionally or alternatively, it would be desirable to provide means to improve image quality and/or to allow to maintain good image quality while reducing the amount of image data that need to be stored.

### SUMMARY OF THE INVENTION

To better address this object, a method according to claim 1, a method according to claim 14, a computer program according to claim 16, a user interface according to claim 17, and an image processing system according to claim 18 are provided. Advantageous embodiments are set out in the dependent claims. The features and advantages of different embodiments as described in the claims and herein can be combined. Any features, advantages or alternative embodiments described herein in relation to the claimed method are also applicable to the other claim categories and vice versa.

According to a first aspect, a computer-implemented method for enhancing the image quality of a medical image region, the medical image region comprising medical image data acquired by a medical imaging modality, is provided. The method comprises the following steps:
(a) receiving image data from within the medical image region;
(b) applying a denoising algorithm on the image data of the medical image region in order to produce denoised image data;
(c) applying a deblurring algorithm on the denoised image data in order to produce enhanced image data;
(d) providing the enhanced image data.

It has been found that applying a denoising algorithm prior to applying the deblurring algorithm can significantly improve the quality and effectiveness of the deblurring algorithm's output. Hence the consecutive application of both these algorithms can lead to better results by improving the performance of the deblurring algorithm. Furthermore, by providing two algorithms, the functionality of one of the individual algorithms may be adapted relatively easily, thereby e.g. allowing to finetune the amount of denoising or adapting the deblurring independently of the denoising depending on the needs for a specific problem. The method can generally be applied for medical image data from any imaging modalities, preferably from imaging modalities with high data demands, such as computed tomography (CT), e.g. comprising both conventional and spectral CT, magnetic resonance imaging (MRI), image guided therapy (IGT), etc. An "imaging modality" in the context of this application in particular refers to a type of imaging used in radiology to acquire images of the human or animal body. It comprises amongst others X-ray imaging, CT, MRI, ultrasound imaging, positron emission spectroscopy (PET).

The term "medical image region" is to be understood broadly in the context of this invention. It generally describes a region of a medical image. The region may extend over the entire medical image or only over part of the medical image. The medical image region may be a two-dimensional region or a three-dimensional region. Correspondingly, the medical image may be a two-dimensional image or a three-dimensional image, which may also be described as a (three-dimensional) image volume.

The image data may, for example, be received from an external storage device or server, from an imaging modality (e.g., directly after obtaining it), from within the image processing device itself that performs the method, and/or from another source.

The denoising algorithm may be configured to output image data with reduced noise based on input image data. "Image data with reduced noise" may also comprise noiseless image data. Preferably, the denoising algorithm may be a trained machine learning algorithm, in particular a trained neural network. In principle, any kind of denoising algorithm may be applied. For example, the denoising algorithm may be configured to directly determine the noise-reduced image. Alternatively, the denoising algorithm may be configured to determine the noise of the input image. In this alternative, the noise may be subtracted from the input image in order to get the noise-reduced image.

The term "deblurring algorithm" is to be understood broadly in the context of this invention. It may generally refer to any algorithm that enhances the image data, in particular such that a user can recognize more information in the medical image region or can recognize information in the medical image region more easily. The deblurring algorithm may be configured to provide the image data with more recognizable details and/or in a less blurry state. It has been found that in many cases image data comprise information that is not visible for the perception of the human eyes. Yet, since the information is stored within the image data, it is possible to enable recognizing this information via the deblurring algorithm. Enhancing the image, e.g. enhancing anatomical structures within the image region, may enable a user, such as a radiologist, to provide a faster and more confident diagnosis of a given pathology. For example, a standard size grid reconstruction (e.g. 512×512 in the axial plane), may be not fine enough for the user to fully exploit the image information. Providing an enhanced image, e.g. anatomic structures in more detail, may thus allow a user to provide a better analysis and diagnosis. For example, enhancing the image data may be performed such that it simulates the medical image region being reconstructed on a finer size grid. It has been found that the possibility to determine and enhance this information via the deblurring algorithm can depend critically on reducing noise of the image via the denoising algorithm before, such that considerably better results may be achieved.

According to an embodiment, after the step of applying the denoising algorithm, the denoised image data is up-sampled or re-reconstructed to have a finer voxel grid and/or a higher resolution and the deblurring algorithm is applied on the up-sampled denoised image data. Optionally, an output or an intermediate output of the deblurring algorithm may be structure enhancement image data. The structure enhancement data may be added to the up-sampled denoised image data. Alternatively, the deblurring algorithm may be configured to also perform the up-sampling. Advantageously, the image may be provided with improved resolution, thus potentially enabling a user to recognize more details on the image. Up-sampling may comprise increasing the image resolution of the denoised image data. For example, up-sampling may comprise increasing the resolution from a 512×512 resolution to a 1024×1024 resolution. Generally, any up-sampling algorithm, as known in the state of the art, may be used for the up-sampling. While, with a simple up-sampling algorithm, additional information may not be made visible, additional information may be made visible via the deblurring algorithm. In this sense, the up-sampling may provide the basis, i.e. a higher resolution, for the deblurring algorithm to provide more detailed and/or deblurred information. Re-reconstructing may comprise taking the geometric definition of the medical image region, in particular from a region of interest, and re-reconstructing this medical image region on a finer voxel grid. Hence, Re-reconstructing may be an alternative way to generate the image data on the finer voxel grid instead of upsampling.

According to an embodiment, after the step of applying the deblurring algorithm, image noise is added to the enhanced image data to generate noisy enhanced image data and, in the step of providing the enhanced image data, noisy enhanced image data is provided. While it is advantageous to apply the deblurring algorithm on denoised image data, in order to improve the performance of the deblurring algorithm, it has been found that adding noise after the application of the deblurring algorithm can be beneficial. In particular, users of medical image data, such as radiologists, are typically used to medical images having at least some degree of noise. Accordingly, it has been found that the users tend to have the impression that noiseless data is synthetic image data and not representing real data. This can often lead to the user not trusting the image data and having more difficulty to provide a confident analysis. A lack of noise may make it more difficult for a user to correctly interpret the image, e.g., because the user's perception may have trouble to process the information without any noise. Accordingly, adding noise to the enhanced image data may advantageously enable a user to provide a more confident and potentially even more accurate analysis.

According to an embodiment, the denoising algorithm additionally outputs a noise estimate that is a difference between the image data before denoising and the denoised image data, wherein the noise estimate is used as basis for the image noise that is added to the enhanced image data after the step of applying the deblurring algorithm. Using the noise estimate as basis for adding noise to the enhanced image data may provide a relatively easy way of adding realistic noise. Typically, imaging modalities, such as CT systems, have characteristic noise distributions that are characteristic for the particular imaging modality. Adding random noise, such as Gaussian noise, may lead to the medical image appearing unfamiliar to a user that is used to have the characteristic noise. In particular, it may be more difficult to recognize anatomical structures and anomalies in the image, if non-realistic noise is applied to the image data, since the overall appearance of the image data may be different from a "realistic image". Accordingly, diagnosis can be made easier for the user by adding realistic noise.

According to an embodiment, the image noise is generated by up-sampling the noise estimate to the higher resolution of the enhanced image data. Hence, this embodiment can be applied in particular, when the denoised image data is up-sampled prior to applying the deblurring algorithm or by the deblurring algorithm. Up-sampling the noise estimate can be a relatively simple way of providing an adaption of the noise estimate to match the enhanced image data. Optionally, when up-sampling the noise estimate, higher frequencies of the noise estimate may be enhanced to correspond to the higher resolution. Enhancing the higher frequencies may, for example, comprise rescaling the frequency distribution of the noise estimate corresponding to the higher resolution. Rescaling the frequency distribution may be performed for local spatial regions of the image data, that are partial regions of the full medical image regions, respectively. Hence, instead of rescaling the frequency distribution for the full medical image region, it may be performed for the local spatial regions, to ensure a stationarity for the noise. Ensuring some stationarity for the noise may enable a more realistic noise. For example, the noise estimate may be Fourier transformed, then rescaled by a factor, and then Fourier back-transformed. For example, the factor may be a scaling factor, i.e. a number, such as a number in the range of 1.1 to 10 (e.g. a factor of 2). Optionally, a trained algorithm, such as a trained generative adversarial network (GAN) may be used to generate the enhanced frequencies of the noise estimate. The input of the trained algorithm may be the noise estimate and the output of the trained algorithm may be a realistically looking noise estimate containing higher frequencies. One main advantage of this embodiment can be that an image perception of the user can be improved due to the realistic noise that is added. However, since this step is usually not crucial for providing the information itself, generally, any approach, in particular also including relatively simple approaches of up-sampling the noise, as known in the state of the art, may be used in this embodiment. The up-sampling may be performed by a noise up-sampling algorithm. The noise up-sampling algorithm may comprise a trained machine learning algorithm. The trained machine learning algorithm of the noise up-sampling algorithm may be trained via a supervised training with training data comprising image pairs of low-resolution noise and higher resolution noise.

According to an embodiment, a pre-stored realistic noise estimate having the image resolution of the enhanced image is used as image noise to be added and/or the image noise is generated by a dedicated noise producing machine learning algorithm with the image resolution of the enhanced image. A dedicated noise producing machine learning algorithm is in particular a machine learning algorithm that is trained to generate synthetized noise. The dedicated noise producing machine learning algorithm may be trained via a supervised training with training data comprising image pairs of enhanced image data and corresponding noisy enhanced image data. Preferably, the noise producing machine learning algorithm is trained to generate noise that is characteristic for the medical imaging modality. For this purpose, the noisy enhanced image data of the image pairs may comprise noise that is characteristic for the medical imaging modality.

According to an embodiment, a user is provided the option via a user interface to select a noise level and/or a level of deblurring, wherein the user selection of the noise level and/or of the level of deblurring is received and the added image noise is set to have the selected noise level and/or the deblurring is performed according to the selected level of deblurring. For example, via the user interface, a slider may be provided to the user for adjusting the noise level and/or the level of deblurring. Advantageously, the option to adapt the noise level may allow a user to individually adapt the noise such that the resulting image is adapted to be closer to medical images with noise as the user is used to and/or prefers. Working with individually familiar and/or preferred noise levels may allow the user to perform a better analysis and diagnosis of the image data. Thus, this method may allow to adapt the noise level to the individual preference of the user. Similarly, the adaption of the deblurring may be used to accommodate for the needs of the user. For example, lower level of deblurring may decrease computational time.

According to an embodiment, the denoising algorithm and/or the deblurring algorithm comprise(s) a trained machine learning network, in particular a trained neural network. The trained neural network may in particular be a convolutional neural network. A trained machine learning network can be particularly well-suited to provide the denoising and/or the image enhancing functionality.

According to an embodiment, the machine learning network of the denoising algorithm is trained via a supervised training with training data comprising image pairs of noisy images and denoised images. An image pair may be artificially generated by providing a noise-free or low-noise image and artificially adding noise to the image. Additionally or alternatively, according to an embodiment, the machine learning network of the deblurring algorithm is trained via a supervised training with training data comprising image pairs of blurred images and deblurred images. An image pair may be artificially generated by providing a high-quality image, e.g. high-resolution and/or non-blurred, and artificially downgrading the image. In either or both embodiments, the image may, for example, be a high-quality image of a high-quality imaging modality.

According to an embodiment, the training data used for the supervised training is created via the following method steps:
- receiving a ground truth image;
- artificially downgrading the image quality of the ground truth image; and
- providing the input training image together with the ground truth image as a training pair for the training data.

This embodiment may be used to generate synthetic training data. Synthetic training data may generally refer to training data that is at least partially generated by other means than by an actual imaging modality, in particular generated by a software module. For example, synthetic training data may also comprise images that are partially synthetic and partially obtained by an imaging modality. Advantageously, this embodiment allows to provide training data pairs of images with high quality (i.e., the ground truth image) and lower quality (i.e., the input training image). This embodiment is applicable to different imaging modalities, i.e. the training data can be used for training machine learning algorithms that are to improve image quality in some way for basically any kind of imaging modality. It can be particularly useful for imaging modalities comprising the application of x-ray radiation to a subject, such as a patient, since the amount of available training for these imaging modalities is typically particularly limited due to the adverse effects of x-ray radiation on the human body, limiting the possibilities of acquiring image data for ethical reasons. However, the method may also be applicable for other imaging modalities, such as magnetic resonance imaging (MRI), or for use during image guided therapy (IGT). The ground truth image may be at least partially obtained from image data acquired by an improved variant of the medical imaging modality or another technique than the medical imaging modality. "Partially obtained" can in particular be understood such that one part of the image is obtained by the respective imaging modality or technique. Hence, either a part or the whole of the ground truth image may be obtained from the respective modality or technique. An improved variant of the medical imaging modality can be understood such, that at least one aspect of the imaging modality is improved. For example, the improved variant may comprise a better scanner, such as a scanner being capable of scanning with a higher resolution, of producing fewer image artifacts, of achieving a better time resolution and/or of producing images with a lower noise level. For example, real conventional CT images may be acquired with a high-resolution scanner to CT images, and the ground truth images may be processed with AI denoising to obtain the ground truth images. Advantageously, in this example, the high-resolution scanner that these images are acquired with need not be the same scanner type which is used for the imaging modality that the software module is later being used for. The improved variant may also be another model of the same kind of imaging modality that is improved in one aspect. The other model may also be equal or even inferior in some aspect, e.g. in an aspect that is not crucial for the purpose of image quality or for the purpose of a particular aspect of image quality. For example, when a low noise level is to be achieved by training a machine learning algorithm with the training data, a time resolution may potentially not be crucial for the process. The other technique may be another kind of imaging modality. For example, the imaging modality may be an imaging modality based on CT and the other kind of imaging modality may be an imaging modality based on MRI. Another technique may also be understood such that another technical variant of the same imaging modality is used.

In order to obtain the input training image, the image quality of the ground truth image is downgraded. Hence, the input training image is a downgraded version of the ground truth image. Downgrading may generally be understood to be any kind of decreasing of image quality and/or of perceivable image information. The downgrading may be chosen to correspond to one or several image degradations typically associated with the medical imaging modality. Hence, the downgrading may be chosen depending on what kind of medical imaging modality and/or what quality level of medical imaging modality is to be used. The downgrading may be thus, that the image quality of the downgraded image corresponds to the typical image quality of the images attainable by the medical imaging modality. Hence the training pair may be suitable to train the machine learning algorithm to improve the image quality of the images from the medical imaging modality. In particular, the image quality of the ground truth image may be downgraded by applying noise and/or blurring. Adding noise may be used to produce training pairs for training a machine learning algorithm to reduce or remove noise. For example, noise may be added by adding noise with statistical characteristics typical for the imaging modality, e.g. statistical characteristics typical for CT images. Lowering the resolution may be used to produce training pairs for training a machine learning algorithm to improve image resolution and/or deblur and sharpen an image. In particular, the lowering and/or the lowering of resolution may be applied directly on an image or for projected image data as described herein. For example, the loss of resolution or the blurring may be achieved by application of a system point spread function (PSF). Additionally and/or alternatively, additional downgrades may be applied. For example, in addition or alternatively to the above-mentioned downgrades, motion and/or image artifacts may be added to the image data. For example, motion can be generated either by means of using dynamic content from natural videos. The downgrading may comprise applying only one of the downgrades or a combination of several of the downgrades. When image artifacts are added, the training pair may be suitable for training of a machine learning algorithm to reduce or remove image artifacts. In CT-related cases the image artifacts may, for example, be cone-beam artifacts.

According to an embodiment, downgrading the image quality comprises:
- forward projecting the image data into a projection space of an artificially designed imaging modality,
- downgrading the image quality of the projected image data in the projection space,
- reconstructing the projected and downgraded image data back into image space.

Preferably, the artificially designed imaging modality is designed to be capable of providing higher image quality than the medical imaging modality. For example, the artificially designed imaging modality may have a higher physical spatial resolution. In the context of this invention, projection space is to be understood broadly. Projection space may describe any kind of image space that corresponds to raw image data as obtained by the artificially designed imaging modality, in particular image data as it is before image reconstruction. Projection space may also be described as projection domain. For example, in the case of CT imaging, the projection space may be the imaging space comprising the x-ray projections as detected by the x-ray detector of the CT system. A higher spatial resolution of a CT system may correspond to smaller detector pixels. Hence, the projection space is designed thus to simulate the projection space if a corresponding imaging modality. It has been found that downgrading the image quality in the projection space, may lead to a more realistic image degradation than downgrading directly in image space. This is likely due to the fact, that the downgrading is applied in a more "raw state" of the data. By forward projecting the image back into image space, the artificial loss in quality is not quite as obvious for an algorithm that, therefore, has to actually learn to handle realistic imaging problems. For example, a more realistic loss of resolution or a more realistic noise may be simulated. Accordingly, the training data acquired via this embodiment may thus lead to better training effects, such as a more robust trained algorithm that can handle realistic problems particularly well.

Alternatively, when image data acquired by the improved variant of the medical imaging modality is available in the projection space state, the step of forward projecting into projection space may be omitted and the data may be directly treated in projection space. This approach may, for example, be advantageous, if a high-quality imaging modality, such as a high-resolution CT scanner is available. In this case, one may directly acquire raw imaging data, such as raw CT data, with high resolution and simulate low-resolution/-exposure data in the projection space. Reconstructing these different sets of projection data may then provide training image pairs for the denoising/deblurring training.

Hence, instead of receiving a ground truth image, image data in projection space may be received and downgrading the image quality may comprise:
- downgrading the image quality of the image data in projection space,
- reconstructing the downgraded image data into image space.

According to an embodiment, the ground truth image is at least partially obtained from natural image data. The term "natural image data" is to be understood broadly in the context of this invention and generally describes images that a human being might observe in the real world. For example, the natural images may show a landscape, an object or an animal or a part thereof. For example, the natural image may be a depiction of sand or a depiction of a part of a tiger. Natural images data may, in particular, be or comprise optical images, also comprising optical frames taken from optical videos. As such, the term "natural image data" may describe image data that is in particular not acquired by the medical imaging modality or by an imaging modality of the same kind as the medical imaging modality. Surprisingly, it has been found, that training data generated from natural images can be used for achieving viable training results, hence making providing actual medical images unnecessary. Hence, for example, when using natural image data, access to high-resolution CT projection data acquired with high an x-ray dose is not necessarily required. Advantageously, natural image data can typically be provided in large quantities and with particular high resolution and only little noise. Accordingly, many training pairs with very good image quality, in particular high resolution and low noise, can be provided relatively easily. The high image resolution that can be obtained with natural images, typically being higher than what may be obtained by medical imaging modalities based on x-ray (e.g., due to dose limitations) can have the fundamental advantage to enable the machine learning algorithm not only to improve a perceived image sharpness but also to improve the real physical spatial resolution. Furthermore, natural images may provide a more diverse set of different textures, which can lead to more robust trained machine learning algorithms. Hence, in some cases, with natural image data, even beyond the advantage of having more training data, the training effect may also be improved due to the quality and diversity of the training data. Prior to their application, the natural images may be converted to a particular color coding corresponding to a typical color coding of the medical imaging modality, e.g. a grey scale. Additionally or alternatively, the training data based on the natural image data may also be used to complement training data based on images obtained by medical imaging modalities.

According to an embodiment, the ground truth image is at least partially obtained from image data taken from a natural video, wherein the time dimension of the natural video is translated into a third spatial dimension in order to obtain three-dimensional image data. Advantageously, natural videos may provide high image resolutions and low noise levels and be thus well-suited for this purpose. The time dimension of the video (i.e. a third dimension) may be used to generate data for the third dimension of three-dimensional image data, i.e. a three-dimensional image volume, in particular such that the third dimension of the three-dimensional image is treated as spatial dimension. For example, different video frames may thus correspond to different layers of the three-dimensional image volume. Using natural videos in this way may thus advantageously allow to generate synthetic training data even for three-dimensional volumes, with relatively low required effort. Prior to their application, the natural videos may be converted to a particular color coding corresponding to a typical color coding of the medical imaging modality, e.g. a grey scale.

According to another aspect of the invention, a computer-implemented method for providing medical image data to a user, the image data being acquired by a medical imaging modality, is provided. The method comprises the following steps:
- providing an image reconstruction of the medical image data to the user on a screen and a user interface with at least one input device that allows the user to select a region of interest within the image reconstruction;
- receiving the selection of the region of interest and, based on the selection, generating image data of within the region of interest;
- enhancing the image quality of the image data within the region of interest in order to generate enhanced image data, optionally by applying the method for enhancing the image quality of a medical image region as described herein;
- providing an image reconstruction of the medical image data to the user on the screen or on another screen, wherein the image reconstruction within the region of interest is based on the enhanced image data.

Advantageously, the inventive method may provide a way of compact data representation. Thus, data processing times and associated hardware costs may be reduced. In the context of the invention, it has been recognized that for some clinical applications high spatial resolution is not necessarily required in all segments of a reconstructed image/volume. In particular, not all clinical applications require a high-resolution representation (compared to the possibilities of imaging modalities, such as computed tomography) of some or all the data to achieve a sufficient degree of diagnostic confidence for a particular disease. Therefore, for high-resolution imaging modalities, e.g. high-resolution CT systems, it is often redundant to reconstruct, transmit and store such large amounts of image data. Hence, particular image structures of within the region of interest may be enhanced selectively. With this method, this aspect may be used to enable data representations that may be advantageous in terms of required data storage and data transmission. Thus, the reconstruction, transmission, and/or storage footprint of the respective data may be reduced.

The screen may be any suitable screen. Any display device may be used as the screen. In particular, the screen may be a digital screen, such as a computer monitor, a touchpad (e.g. of a smartphone or table) etc. The input device may be any suitable input device, such as a peripheral input device of a computer and/or of an imaging system. For example, the at least one input device may comprise a computer mouse, a trackball, a keyboard, a trackable pointer, a touchpad and/or a voice command microphone. The region of interest may, for example, be or comprise an organ and/or a particular anatomical region.

Based on the selection, image data of within the region of interest may be generated. The image data of within the defined region of interest may be generated via a segmentation algorithm that works based on the user selection.

The medical image data may generally be any kind of medical image data. For example, the medical image data may be two-dimensional or three-dimensional image data. Advantageously, the method may be used for three-dimensional image data to also impact the level of detail in a third image direction.

The image enhancement may in particular be performed by applying the method for enhancing the image quality of a medical image region as described herein. This method may be well-suitable for this purpose. However, any other way of image enhancement may also be used to achieve the advantage of this particular method. Hence, the for providing medical image data to a user does not have to be restricted to a particular method of image enhancement.

Enhancing the image quality may allow the user to provide a faster and more confident diagnosis of a given pathology. The image reconstruction being based on the enhanced image data may, for example, mean that the image within the region of interest is reconstructed from enhanced raw data. Alternatively, for example, the image within the region of interest may be enhanced directly in image space, and the provided image reconstruction within the region of interest may be provided by directly replacing the image within the image region with the enhanced image. Hence, optionally, the image reconstruction may be provided by enhancing the original image reconstruction in image space and using the result directly. Accordingly, the overall image size may still be significantly reduced compared to a higher-resolution image while the image quality in the region of interest may be the same or similar to the corresponding higher-resolution image.

According to another aspect of the invention, the user interface comprises the option to delineate the region of interest and/or the user interface comprises the option to select one or several anatomical parts, such as organs, to be the region of interest. For example, the option to delineating may be provided by a user-movement tracking input device, such as a computer mouse, and the user interface having the option to follow the movement provided by the user. Optionally, at least one regions of interest may be suggested automatically. The suggestion may correspond to the one or several anatomical parts. The user may have the option to adapt the suggestion and/or accept the suggestion. For example, the suggestion may be provided via an automatic segmentation algorithm, such as a multi-organ segmentation algorithm.

According to another aspect of the invention, a computer program is provided that comprises instructions which, when the program is executed by an image processing system, cause the image processing system to carry out the method as described herein. The computer program may comprise instructions according to the computer-implemented method for enhancing the image quality of a medical image region as described herein. Additionally or alternatively, the computer program may comprise instructions according to the computer-implemented method for providing medical image data to a user as described herein.

According to another aspect of the invention, a user interface that is configured according to the user interface as described herein is provided. The user interface may in particular be configured to provide output to a user and receive input from the user. The user interface may comprise or be connectable to at least one input device that allows the user to select a region of interest within the image reconstruction. The user interface may comprise or be connectable to at least one screen for providing an image reconstruction of medical image data to the user. Optionally, the user interface may comprise the option to delineate the region of interest and/or the user interface may comprise the option to select one or several anatomical parts, such as organs, to be the region of interest.

According to another aspect of the invention, an image processing system comprising a user interface with at least one input device, a processing circuitry, and, optionally, a screen is provided. The image processing system is configured to carry out the method as described herein. The image processing system may be configured to carry out the computer-implemented method for enhancing the image quality of a medical image region as described herein. Additionally or alternatively, the image processing system may be configured to carry out the computer-implemented method for providing medical image data to a user as described herein. For example, the image processing system may be or may comprise a computer, a tablet, a smartphone, a control station of an imaging system, etc. For example, the imaging system may be a computed tomography system.

### BRIEF DESCRIPTION OF THE DRAWINGS

The invention shall now be illustrated by means of embodiments with reference to the attached drawings, in which:
Fig. 1 shows a flow diagram of a computer-implemented method for enhancing the image quality of a medical image region according to an embodiment of the invention;
Fig. 2 shows a flow diagram of a computer-implemented method for enhancing the image quality of a medical image region according to another embodiment of the invention;
Fig. 3 shows exemplary medical images in a region around the kidney;
Fig. 4 shows a diagram of a computer-implemented method for training a deblurring algorithm according to an embodiment of the invention;
Fig. 5 shows a diagram of a computer-implemented method for generating synthetic training data for training a machine learning algorithm according to the invention; and
Fig. 6 shows a user interface according to an embodiment of the invention.

### DESCRIPTION OF EMBODIMENTS

Throughout the Figures, the same or corresponding features/elements of the various embodiments are designated with the same reference numbers.

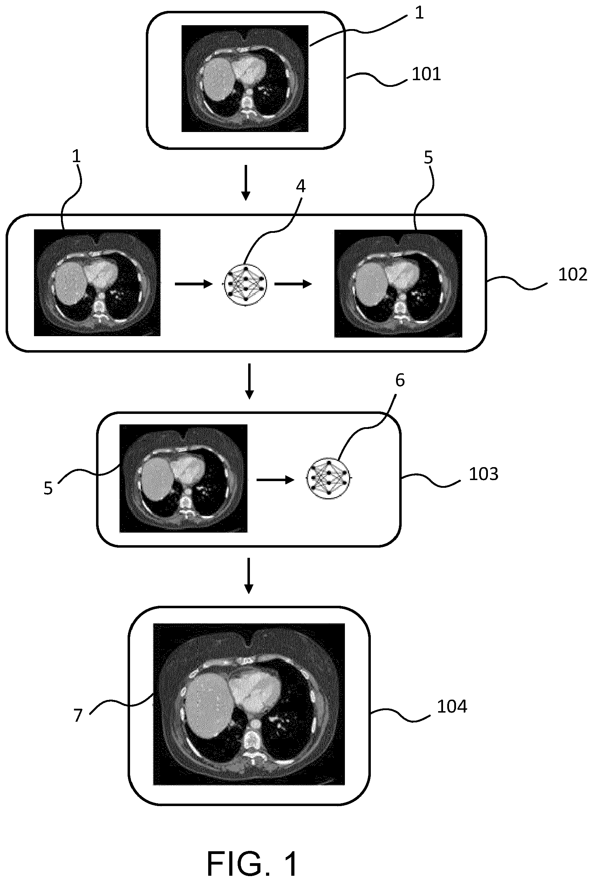

Fig. 1 shows a flow diagram of a computer-implemented method for enhancing the image quality of a medical image region according to an embodiment of the invention. The medical image region comprises medical image data 1 acquired by a medical imaging modality. The region may extend over an entire medical image or only over part of the medical image. For example, the medical image region may be a two-dimensional region or a three-dimensional region. In a first step 101, image data 1 from within the medical image region is received. In a further step 102 a denoising algorithm 4 is applied on the image data 1 of the medical image region in order to produce denoised image data 5. Preferably, the denoising algorithm 4 may be or comprise a trained machine learning algorithm, in particular a trained neural network. The machine learning algorithm may, for example, be trained to remove noise from an image and thus the output may directly bey the denoised image data 5. Alternatively, for example, a noise estimate 11 may be generated and the noise estimate 11 may be subtracted from the image data 1 in order to generate the denoised image data 5. In a further step 103, a deblurring algorithm 6 is applied on the denoised image data 5 in order to produce enhanced image data 7. The deblurring algorithm 6 may be any algorithm that enhances the image data 1. For example, the deblurring algorithm 6 may be configured to provide the image data 1 with more recognizable details and/or in a less blurry state. In a further step 104, the enhanced image data 7 is provided. For example, the enhanced image data 7 may be shown on a screen.

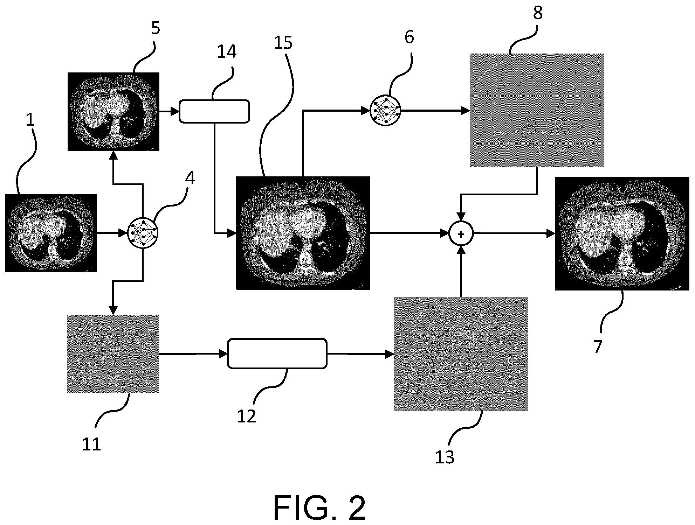

Fig. 2 shows a flow diagram of a computer-implemented method for enhancing the image quality of a medical image region according to another embodiment of the invention, the medical image region comprising medical image data 1 acquired by a medical imaging modality. First, image data 1 from within the medical image region is received. Furthermore, a denoising algorithm 4 is applied on the image data of the medical image region in order to produce denoised image data 5. The denoising algorithm 4 comprises a trained machine learning network, in particular a trained neural network, that is trained to denoise the image data directly or to produce a noise estimate 11. The noise estimate 11 may be subtracted from the image data in order to generate the denoise image data. In addition to the denoised image data 5, the denoising algorithm 4 additionally outputs a noise estimate 11. The noise estimate 11 may be the noise estimate 11 produced directly. Alternatively, if the denoised image is produced directly, the noise estimate 11 may be produced by calculating a difference between the image data before denoising and the denoised image data 5. In both cases, the noise estimate 11 may be regarded to be a difference between the image data before denoising and the denoised image data 5. After the step of applying the denoising algorithm 4, the denoised image data 5 is up-sampled, e.g. by an interpolation algorithm 14, to a have a higher resolution and a deblurring algorithm 6 is applied on the up-sampled denoised image data 15 in order to produce enhanced image data 7. The deblurring algorithm 6 may comprise a trained machine learning network, in particular a trained neural network. Optionally, the output of the deblurring algorithm 6 may be structure enhancement image data 8. The structure enhancement data 8 may be added to the up-sampled denoised image data 15. Optionally, after the step of applying the deblurring algorithm 6, image noise 13 may be added to the enhanced image data 7 to generate noisy enhanced image data 7. Adding noise may be provided for a user who prefers noisy images. Noise in the image may typically give a better visual perception for human users compared to completely noiseless images. Especially users that are normally used to have at least some kind of noise will typically find it easier to recognize details and be confident about the analysis of a medical image when the image is not completely noise free. In this case, a completely noise-free image may even appear noisy and/or unreal to a user, potentially leading to a less profound analysis. Preferably, the noise estimate 11 is used as basis for the image noise 13 that is added to the enhanced image data 7. The image noise 13 may be generated by up-sampling the noise estimate 11 to the higher resolution of the enhanced image data 7, e.g. by a noise up-sampling algorithm 12. Alternatively, a pre-stored realistic noise estimate 11 having the image resolution of the enhanced image may be used as image noise 13 to be added and/or the image noise 13 may be generated by a dedicated noise producing machine learning algorithm with the image resolution of the enhanced image. Optionally, a user may be provided the option via a user interface to select a noise level that is to be added. According to this option, the user selection of the noise level is received and the added image noise 13 is set to have the selected noise level. Hence, the intensity of the noise may be adapted according to the user input. Finally, the enhanced image data 7 and/or the noisy enhanced image data 7 is provided. For example, the enhanced image data 7 and/or the noisy enhanced image data 7 may be provided to a user via a screen.

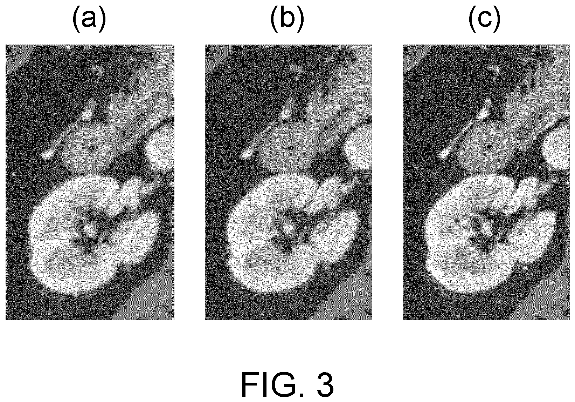

Fig. 3 shows exemplary medical images in a region around the kidney. The left image (a) shows a medical image having a 512×512 grid resolution. On this image a method as described in Fig. 2 has been applied in order to generate the image (c) on the right having a 1024 × 1024 grid resolution and showing the image with a sharper appearance. Namely, the image has been denoised, interpolated to the 1024× 1024 grid resolution, enhanced by the deblurring algorithm 6 and then some image noise 13 was added. The central image (b) is a reference image with a native 1024× 1024 grid resolution. As can be seen by comparison of images (a) to (c) the method according to the invention enables a high high-quality structure enhancement. The image matrix size sizes of the such image treated according to the inventive method is reduced by 4 times compared to the reference reconstruction at full resolution (i.e. compared to image b). Notably, the level of detail in the right image (c) is even in parts beyond that of the reference denoised 1024x1024 reconstruction in the central image (b). It should be noted that, although the inventive method is demonstrated in this example in the axial plane (i.e. with a two-dimensional image), the method can also be applied to three-dimensional image data, i.e. to also impact the level of detail in the z-direction.

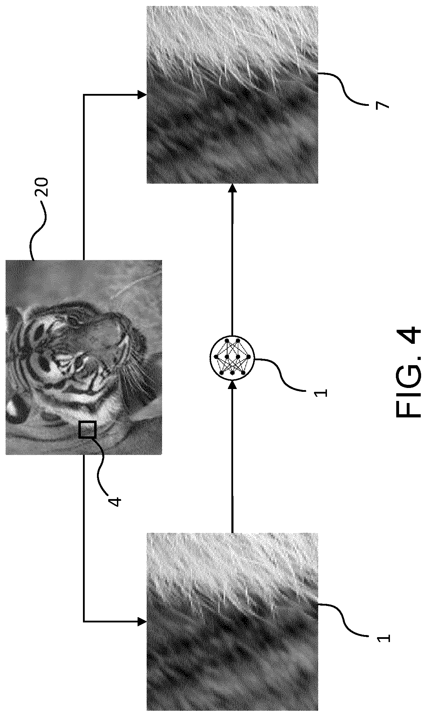

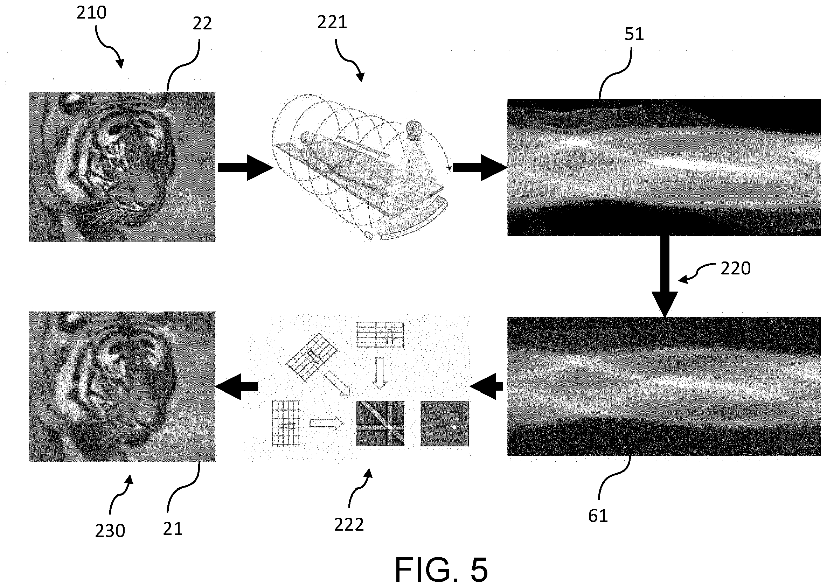

Fig. 4 shows a diagram of a computer-implemented method for training the deblurring algorithm 6 according to an embodiment of the invention. In this case, the deblurring algorithm 6 is provided to be a machine learning algorithm, in particular a machine learning network. For the training, training data is used that comprises blurred and deblurred images, as training pairs. In this example, a natural image 20, namely a part 25 of a natural image 20 showing a tiger head, is used, to generate the training data. The ground truth training image 22 may be provided by just using the part 25 of the natural image 20. The input training image 21 (i.e. the blurred image) may be generated by artificially downgrading the image quality of the ground truth training image 22, e.g. by applying noise and/or blurring. Optionally, the ground truth image may also be generated by receiving a medical image obtained by the medical imaging modality or another medical imaging modality and replacing at least one part of the medical image with at least one image part taken from at least one natural image 20. Optionally, in order to generate three-dimensional training data, the ground truth image may be at least partially obtained from image data taken from a natural video and the time dimension of the natural video may be translated into a third spatial dimension in order to obtain three-dimensional image data. The method may also be used accordingly to train the denoising algorithm 4 by correspondingly using noisy images and denoised images as training data. Alternatively, the training data that are used may also be generated as described with respect to Fig. 5.

Fig. 5 shows a diagram of a computer-implemented method for generating synthetic training data for training a machine learning algorithm, in particular the denoising algorithm 4 and/or the deblurring algorithm 6, according to the invention. In a first step 210, a ground truth image 22 is received. In this example, the embodiment is a natural image 20, i.e., an optical image of a tiger head. Generally, an image from another source, preferably a high-resolution image (for training the deblurring algorithm 6) may also be used, instead. Optionally, the ground truth may be at least partially obtained from image data taken from a natural video, such that the time dimension of the natural video is translated into a third spatial dimension in order to obtain three-dimensional image data, i.e. a three-dimensional image volume. In a further step 221, the image data, i.e. here the ground truth image 22, is forward projected into a projection space of an artificially designed imaging modality, such that projected image data 51 is generated. The artificially designed imaging modality may, for example, be a computed tomography detector with artificially high resolution. In a further step 220, the image quality of the projected image data 51 is downgraded in the projection space. This may be done by down-sampling the projected image data 51 to an imaging modality with lower resolution. Hence, the image data may thus become more blurred. Alternatively, in order to generate training data for a denoising machine learning algorithm, a low-dose simulation may be applied in order to introduce noise into the image data. As a result, noisy low-resolution projected image data 61 may be obtained. It is generally also conceivable to apply both, a reduction in resolution and an application of noise, in order to generate training data that can train both, a deblurring and a denoising. In a further step 222, the projected and downgraded image data 61 is than reconstructed back into image space, in order to obtain an input training image 21. The input training image 21 is more blurred and noisier compared to the ground truth image 22. In a further step 230, the input training image 21 is provided together with the ground truth image 22 as a training pair for the training data. Accordingly, the training pair may be a pair of a noisy image and a denoised images for training the denoising algorithm 4, or a pair of a blurred image and an unblurred image for training the deblurring algorithm 6.

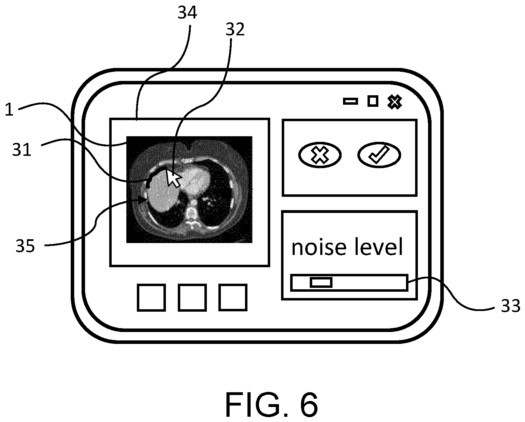

Fig. 6 shows a user interface according to an embodiment of the invention. The user interface comprises a display area 34 for showing an image reconstruction of medical image data 1 to a user on a screen. The user interface is configured to receive input from a user to select a region of interest 35 within the image reconstruction. The user interface may comprise the option to delineate the region of interest 35 as shown here. Hence, the user may delineate 31 the region of interest 35 with the help of a mouse curser 32 or another selection tool. Additionally or alternatively, the user interface may comprise the option to select one or several anatomical parts, such as organs, to be the region of interest 35. The user interface is configured to receive the user selection of the region of interest 35. Based on the selection, image data of within the region of interest 35 may be generated and processed by a computer-implemented method as described, for example, with respect to Figs 1 or 2, in order to generate enhanced image data 7. The user interface is further configured to provide an image reconstruction of the medical image data to the user on the screen or on another screen, such that the image reconstruction within the region of interest 35 is based on the enhanced image data 7. Optionally, the user interface may comprise an option for the user to select a noise level. The user selection of the noise level may be received and image noise 13 may be added to the enhanced image according to the selected noise level. In this example, a slider 33 is provided to the user for adjusting the noise level.

The above-discussion is intended to be merely illustrative of the present method and system and should not be construed as limiting the appended claims to any particular embodiment or group of embodiments. Accordingly, the specification and drawings are to be regarded in an illustrative manner and are not intended to limit the scope of the appended claims. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "an" or "a" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS

- 1: image data
- 4: denoising algorithm
- 5: denoised image data
- 6: deblurring algorithm
- 7: enhanced image data
- 8: structure enhancement image data
- 11: noise estimate
- 12: noise up-sampling algorithm
- 13: image noise
- 14: interpolation algorithm
- 15: up-sampled denoised image data
- 20: natural image
- 21: input training image
- 22: ground truth training image
- 25: part of a natural image
- 31: delineation
- 32: computer mouse curser
- 33: slider for setting a noise level
- 34: display area
- 35: region of interest
- 51: projected image data
- 61: projected and downgraded image data
- 110-130: method steps
- 210-230: method steps

## Claims

1. A computer-implemented method for enhancing the image quality of a medical image region, the medical image region comprising medical image data acquired by a medical imaging modality,
the method comprising the following steps:
(a) receiving image data from within the medical image region;
(b) applying a denoising algorithm (4) on the image data of the medical image region in order to produce denoised image data (5);
(c) applying a deblurring algorithm (6) on the denoised image data (5) in order to produce enhanced image data (7);
(d) providing the enhanced image data (7).

2. The method according to claim 1,
wherein, after the step of applying the denoising algorithm (4), the denoised image data (5) is up-sampled or re-reconstructed to a have a finer voxel grid and the deblurring algorithm (6) is applied on the up-sampled denoised image data (15).

3. The method according to any one of the preceding claims,
wherein, after the step of applying the deblurring algorithm (6), image noise (13) is added to the enhanced image data (7) to generate noisy enhanced image data (7) and, in the step of providing the enhanced image data (7), noisy enhanced image data (7) is provided.

4. The method according to claim 3,
wherein the denoising algorithm (4) additionally outputs a noise estimate (11) that is a difference between the image data before denoising and the denoised image data (5),
wherein the noise estimate (11) is used as basis for the image noise (13) that is added to the enhanced image data (7) after the step of applying the deblurring algorithm (6).

5. The method according to claims 2 and 4,
wherein the image noise (13) is generated by up-sampling the noise estimate (11) to the higher resolution of the enhanced image data (7).

6. The method according to claim 3,
wherein a pre-stored realistic noise estimate (11) having the image resolution of the enhanced image is used as image noise (13) to be added and/or
wherein the image noise (13) is generated by a dedicated noise producing machine learning algorithm with the image resolution of the enhanced image.

7. The method according to any one of claims 3 to 6,
wherein a user is provided the option via a user interface to select a noise level and/or a level of deblurring,
wherein the user selection of the noise level and/or of the deblurring is received and the added image noise (13) is set to have the selected noise level and/or the deblurring is performed according to the selected level of deblurring.

8. The method according to any one of the preceding claims,
wherein the denoising algorithm (4) and/or the deblurring algorithm (6) comprises a trained machine learning network, in particular a trained neural network.
wherein the machine learning network is trained via a supervised training with training data comprising image pairs of
noisy images and denoised images
or
blurred images and deblurred images,
respectively.
wherein the training data used for the supervised training is created via the following method steps:
- receiving a ground truth image;
- artificially downgrading the image quality of the ground truth image, by applying noise and/or blurring, to obtain an input training image (21); and
- providing the input training image (21) together with the ground truth image as a training pair for the training data.

9. The method according to claim 8
wherein the ground truth image is at least partially obtained from natural image (20) data.

10. The method according to any one of claims 8 or 9.
wherein the ground truth image is at least partially obtained from image data taken from a natural video, wherein the time dimension of the natural video is translated into a third spatial dimension in order to obtain three-dimensional image data.

11. A computer-implemented method for providing medical image data to a user, the image data being acquired by a medical imaging modality,
the method comprising the following steps:
- providing an image reconstruction of the medical image data to the user on a screen and a user interface with at least one input device that allows the user to select a region of interest (35) within the image reconstruction;
- receiving the selection of the region of interest (35) and, based on the selection, generating image data of within the region of interest (35);
- enhancing the image quality of the image data within the region of interest (35) in order to generate enhanced image data (7) by applying the method according to any one of the preceding claims;
- providing an image reconstruction of the medical image data to the user on the screen or on another screen, wherein the image reconstruction within the region of interest (35) is based on the enhanced image data (7).

12. The method according to claim 11,
wherein the user interface comprises the option to delineate the region of interest (35) and/or
wherein the user interface comprises the option to select one or several anatomical parts, such as organs, to be the region of interest (35).

13. A computer program comprising instructions which, when the program is executed by an image processing system, cause the image processing system to carry out the method according to any one of the preceding claims.

14. A user interface that is configured, in particular to provide output to a user and receive input from the user, according to the user interface described in any one of claims 12 or 13.

15. An image processing system comprising a user interface with at least one input device, a processing circuitry, and, optionally, a screen,
wherein the image processing system is configured to carry out the method according to any one of claims 1 to 14.
